# EUROPEAN PATENT SPECIFICATION

(11) **EP 2 441 194 B1**
(45) Date of publication and mention of the grant of the patent: **03.04.2013**
(21) Application number: 09779719.5
(22) Date of filing: 10.06.2009
(51) Int. Cl.: H04L 1/00

(54) **CODE BLOCK SELECTION COMBINING IN MULTI POINT RECEPTION UP-LINK DATA TRANSFER**
CODEBLOCKAUSWAHLKOMBINIEREN BEIM MEHRPUNKT-EMPFANGS-AUFWÄRTSVERBINDUNG-DATENÜBERTRAGUNG
SÉLECTION DE BLOCS DE CODE COMBINÉE DANS UN TRANSFERT DE DONNÉES SUR LA LIAISON MONTANTE À RÉCEPTION MULTIPOINT

(43) Date of publication of application: 18.04.2012
(73) Proprietor: Nokia Siemens Networks Oy, 02610 Espoo (FI)
(72) Inventor: CHMIEL, Mieszko, PL-48-340 Glucholazy (PL); BAUMGARTNER, Bernd, 89537 Giengen (DE)
(86) International application number: PCT/EP2009/057219
(87) International publication number: WO 2010/142334

(56) References cited:
- ALCATEL-LUCENT: "Definition of Backhaul according to Level of Cooperation in CoMP UL" 3GPP DRAFT; R1-091751_BACKHAUL_REQ_DEP_COMP_UL_LEVEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339276 [retrieved on 2009-04-28]
- ALCATEL-LUCENT SHANGHAI BELL ET AL: "Efficient uplink coordinated multi-point reception with reduced backhauling cost" 3GPP DRAFT; R1-092146 EFFICIENT UPLINK COORDINATED MULTI-POINT RECEPTION WITH REDUCED BACKHAULING COST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339589 [retrieved on 2009-04-28]
- HUAWEI: "Considerations on the Uplink Reference Signal for CoMP" 3GPP DRAFT; R1-091267 CONSIDERATIONS ON THE UPLINK REFERENCE SIGNAL FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338875 [retrieved on 2009-03-17] cited in the application

## Description

### Field of invention

The present invention generally relates to the field of mobile telecommunication networks. In particular, the present invention relates to a method for transferring data within a mobile telecommunication network from a user equipment (UE) being served by a serving base station (BS) to the serving base station, wherein the data transfer is based on the principle of point to multipoint reception. Further, the present invention relates to a base station which, in combination with other network elements of a mobile telecommunication network, is adapted for carrying out the above mentioned uplink data transfer method. Thereby, the mobile telecommunication network may be a Long Term Evolution Advanced (LTE-Advanced) system, which currently is specified in the 3rd Generation Partnership Project (3GPP). Furthermore, the present invention relates to a computer readable medium and to a program element for controlling the above mentioned uplink data transfer method.

### Art Background

Coordinated Point to Multipoint transmission/reception is presently considered as a promising candidate technology for Release 10 of LTE-Advanced. This has already been documented in chapter 8 of the Technical Report "3GPP TR 36.814 VO.4.1 (2009-02), Further Advancements for E-UTRA Physical Layer Aspects". Point to Multipoint technique can provide significant gains compared to single point transmission/reception as specified in Release 8 of LTE.

In coordinated point to multipoint reception, a data signal from a terminal or a user equipment is received and possibly processed to a certain stage at multiple (geographically or directionally separated) reception points. The reception points are in particular base stations, which are assigned to different cells of the mobile telecommunication network. Then the signal received at multiple reception points can be forwarded to a single anchor point for further processing in order to improve the Block Error Rate (BLER) compared to a single point reception as described in document "R1-091751, Definction of Backhalm according to Level of Cooperation in CoMP", San Francisco, USA, 28 April 2009. Thereby, the anchor point is the base station, which is currently serving the mobile terminal.

In this kind of operation the selected data signals are forwarded over the backhaul channel of each base station back towards the serving base station respectively the anchor point. In order to avoid on overload over the backhaul the selected signals are processed at the different base stations prior to forwarding them to the anchor point. However, there is no clear decision as to how much of the signal is processed locally at the different base stations. Currently, there are known two methods (A) and (B) for processing uplink (UL) data signals in a point to multipoint reception:
(A) Wideband Code Division Multiple Access (WCDMA) Release 99, soft handover (HO) also known as UL macro diversity:
   The terminal's uplink Transport Block (TB) is received at multiple reception points (different BSs), then processed through the whole Physical Layer 1 receiver chain up to (and including) a Cyclic Redundancy Check (CRC). Then the hard bits of the TB (regardless if the CRC checked or not) together with a per TB frame reliability indicator (i.e. a CRC check indicator) are forwarded to an anchor point, which in this case is a Radio Network Controller (RNC). The RNC performs the transport block selection combining prior to a further transmission of a single TB.
   In Release 6 of WCDMA an Enhanced Dedicated Channel (E-DCH) has been introduced. The above described scheme has been further enhanced in such a manner that a TB with a non valid CRC is not forwarded to the anchor point.
(B) LTE-Advanced:
   In the publication "R1-083229, LTE-A Multiple Point Coordination and Its Classification, TSG-RAN WG1 #54, Jeju, South Korea, August 18-22, 2008" from Motorola it is described that data signals from a UE, which data signals are accessible at antenna ports of multiple points, are routed to an anchor point. Because in this case soft symbols (or soft equalized symbols) from multiple points are available at the anchor point, the joint processing can be in a form of maximum ratio combining (MRC). An alternative is to process the UE's data signal to a later stage at multiple points and route all the decoded soft bits/Log-likelihood ratios (LLRs) to an anchor point for soft combining, hard decision and the TB CRC check. Thereby, the processing is carried out up to and including a turbo decoding stage but without the hard decision.

The disadvantage of method (A) is that the whole TB is not forwarded or the whole TB is useless at the anchor point whenever the CRC is not correct. This is the case in particular when the TB is not correctly decoded at a certain point within the respective processing chain. Furthermore, this scheme cannot be directly applied to LTE UL because contrary to WCDMA, in the LTE UL there is no information transmitted by the UE to describe the exact UL transmission format. In LTE the UE simply follows the BS (eNB) configuration and the UL scheduling grants.

The disadvantage of method (B) is the increased required capacity of the backhaul capacity. When considering practical implementations with e.g. 6 - 12 bits per soft decoded bit/LLR, there can be a ten-fold increase in the data traffic compared to method (A) on each link from the reception point to the anchor point. And finally, the scheme of the described method (B) would route all the received soft bit/symbols regardless of their individual reliability and would require to divide the uplink processing between the network nodes in an unusual way such as for instance channel estimation and turbo decoding in different nodes or turbo decoding and hard decisions in different nodes. This unusual uplink processing and the extensive requirements on the backhaul capacity were the main reasons not to support this kind of MRC or soft combining in the UL of WCDMA.

There may be a need for improving the efficiency of a data transfer, which is relying on a point to multipoint reception.

### Summary of the Invention

This need may be met by the subject matter according to the independent claims. Advantageous embodiments of the present invention are described by the dependent claims.

According to a first aspect of the invention there is described a method for transferring data within a mobile telecommunication network from a user equipment being served by a serving base station to the serving base station. The described method comprises (a) receiving a coded data signal representing the data from the user equipment both by the serving base station and by at least one neighboring base station, (b) processing the coded data signal both by the serving base station and by the neighboring base station, wherein each processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, (c) forwarding the decoded code blocks, which have been correctly decoded by the neighboring base station, from the neighboring base station to the serving base station, and (d) restoring the data at the serving base station by combining the correctly decoded code blocks, which have been processed by the serving base station, with the forwarded decoded code blocks.

The described uplink data transferring method is based on the idea that instead of combining comparatively large transport blocks (TB), which in LTE technology can have a size of more than 75,000 bits, the much smaller code blocks (CB) having a size of in maximum 6144 bits can be used for combining portions of the data signal at the serving base station (BS). Thereby, different code blocks may be transmitted from the user equipment (UE) to the serving BS via different radio propagation paths. According to the principles of point to multipoint reception a first radio propagation path extends directly between the UE and the serving BS and a second radio propagation path extends to a neighboring BS. A code block being transmitted via the second radio propagation path is then forwarded to the serving base station. However, if there is a good radio connection between the UE and both the serving BS and the neighboring BS of course both BSs receive the complete coded data signal.

It is mentioned that the data signal combining on the basis of CBs could also be carried out with CBs, which have reached the serving base station via two or more different neighboring BSs. Thereby, the CBs, which have been forwarded from different neighboring BSs, might be combined with each other. It might even be possible to combine only forwarded CBs with each other and to omit any CB, which might have been generated from the coded data signal, which has been received directly by the serving BS.

Generally speaking, the described invention proposes to use code block segmentation and code block CRC in order to enable a new type of UL multi-cell combining. This UL multi-cell combining, which is carried out at the serving BS, might be called code block selection combining. Thereby, incorrectly decoded CBs at the serving BS can be replaced with the correctly decoded CBs received from other neighboring BSs. The correctly decoded CBs may be concatenated in order to restore a TB. The serving BS may then perform a TB CRC check.

The coded data signal may be generated by the UE. Thereby, known coding procedures for the data which are supposed to be transferred from the UE to the serving BS may be employed. The coding procedure may be accomplished with data bits arranged in TBs with a predetermined number of bits.

In a first step of such a coding procedure a Cyclic Redundancy Check (CRC) attachment may be appended to the TB.

In a second step, a CB segmentation may be carried out, wherein the TB is segmented into two or more CBs. Thereby each CB has a size which allows to process the CB within the physical layer 1 of the Open Systems Interconnection (OSI) model for layered communications and computer network protocol design. This holds both for the coding in the transmitting network element (i.e. the UE) and for the decoding in the receiving network element (i.e. in the serving BS and the neighboring BS). Within this second step further a CB CRC attachment may be appended to each CB.

In a third step a channel coding may be carried out. Thereby, the coding rate may depend on the radio transmission conditions between the UE and the serving BS. The coding rate r may be for instance any value between 1/3 and 1. Thereby, the coding rate r is defined by the ratio between (a) the number N of real data bits and (b) the sum of the number K of redundancy bits and the number N of real data bits (r = N / (N+K)). Therefore, a coding rate of "1/2" means that N = K. Correspondingly, a coding rate of "one" means that there are no redundancy bits at all (N = 0). Further, a coding rate of "1/3", which is used for instance for a so called turbo coding, means that N = K/2.

In a fourth step a rate matching may be carried out at the transmitter respectively at the UE side. Thereby, the number of encoded symbols being included in one Code Block is adapted to the currently available data transport capacity. The transport capacity on air is a function in particular of the bandwidth, the modulation scheme and/or the presence and absence of control information.

The processing of the coded data signal, which is carried out by the serving BS and at least on one neighboring BS, is carried out until and including the CB CRC check. If this CRC check is successful, the neighbouring BSs send the correctly decoded hard bits of the CB to the serving BS respectively the anchor point of the UE.

The described data transfer method may provide the advantage that compared to point to multipoint schemes exchanging soft bits respectively soft symbols only a reduced backhaul capacity between the neighboring BS and the serving BS will be necessary. This holds because only hard bits, which are assigned to correctly received code blocks, are forwarded from the neighboring BS to the serving BS. Therefore, there is no need to agree on implementation-specific number of quantization levels for soft bits respectively soft symbols.

The described data transfer method may further provide the advantage that compared to a known TB selection combining a significantly improved performance can be realized. This holds because even if the TB is individually not correctly received at each of the multiple points (i.e. the serving BS and the at least one neighboring BS), the serving BS can correctly decode the TB and improve the Block Error Rate (BLER) via the described CB selection combining.

According to an embodiment of the invention the method further comprises providing decoding information from the serving base station to the at least one neighboring base station, wherein the decoding information is indicative for a proper decoding of the code blocks at the at least one neighboring base station.

This may mean that the serving base station provides the cells with all necessary information enabling the neighboring BSs of these cells to receive and decode the UL signal from the UE. Thereby, in order to enhance joint reception also a synchronization between the UE and the neighboring BS may be carried out.

In other words, the neighboring BS(s) is(are) configured by the serving BS to receive the UL signal of the UE by providing the sufficient information, which is necessary to perform a proper decoding of the CB(s) on the receiver side, which have been encoded before on the transmitter side (i.e. the UE).

According to a further embodiment of the invention the decoding information is indicative for a dynamic configuration of the user equipment.

The decoding information about the dynamic UE configuration may be included in every message, which is transmitted from the serving BS to the neighboring BS(s). This may help to keep the neighboring BS(s) up to date about every change of the UE coding behavior, which naturally also requests a change of the corresponding decoding procedure on the receiver side.

Specifically, the decoding information may be indicative for the grant of uplink (UL) resources to the UE. This is also known as an UL grant.

According to a further embodiment of the invention the decoding information comprises at least one of the following information: the size for transport blocks, the allocation of radio transmission resources, redundancy version, a request flag for a Channel Quality Indicator, a cyclic shift for demodulation reference signal, presence and/or absence of acknowledgement and/or non- acknowledgement messages, and/or configuration of acknowledgement and/or non-acknowledgement messages.

It is mentioned that this list is non exhaustive. This means that also other parameters / information may be included in the described decoding information being indicative for a dynamic UE configuration.

In this context it is pointed out that for transmitting data via a radio link an appropriate radio transmission resource has to be provided. Typically, for the data transfer the overall available radio transmission resource is subdivided into a plurality of minimum radio transmission resource units. This minimum unit may be called a physical resource block (PRB), a chunk and/or a subframe. The minimum unit may be illustrated as a two-dimensional element within a coordinate system having a time-axis and a frequency-axis.

According to a further embodiment of the invention the decoding information is indicative for a semi-static configuration of the user equipment.

In this respect a semi-static configuration is a configuration, which is not changed so often that it makes sense to at least temporarily store the respective information in each neighboring BS, which is supposed to participate in the joint reception of the coded data signal. Therefore, it may not be necessary to include (at least some of) the semi-static configuration in each message between the serving BS and the neighboring BS(s).

The semi-static configuration may be indicative for a Radio Resource Control (RRC) by the serving BS respectively within the serving cell of the mobile telecommunication network. With the RRC the above described radio transmission resources may be controlled with respect to various UE(s) being currently served by the serving BS. Thereby, the overall available radio transmission resource can be distributed among these UE(s). Since the radio conditions may frequently change, the radio transmission resource distribution should be frequently updated in order to provide for an effective data transfer within in particular the serving cell of the mobile telecommunication network. The same holds for the demand for the amount of radio transmission resources, which have to assigned to a particular UE, in order to guarantee for a requested Quality of Service.

According to a further embodiment of the invention the decoding information comprises at least one of the following information: configuration of the uplink demodulation reference signal, radio network temporary identifier of the UE, identification of the serving base station (respectively the serving cell ID), presence and/or absence of a sounding reference signal, presence and/or absence of a Channel Quality Indicator, a Rank Indicator and/or Precoding Matrix Indicator, configuration of a Channel Quality Indicator, and/or a Rank Indicator, and/or Precoding Matrix Indicator and/or configuration of the sounding reference signal resources. It is mentioned that also this list is non exhaustive.

According to a further embodiment of the invention forwarding the decoded code blocks from the neighboring base station to the serving base station is carried out via a backbone interface connecting the serving base station and the neighboring base station.

The backbone interface may be in particular the known X2 interface. However, forwarding of the decoded CB(s) may also be carried out via an over-the-air interface being used for BS-to-BS communication or via a proprietary interface.

According to a further embodiment of the invention the method further comprises (a) performing a transport block cyclic redundancy check on the restored data, and (b) if the transport block cyclic redundancy check is successful, transmitting a positive acknowledgement message from the serving base station to the user equipment. This may mean that if all CB(s) are in the end properly decoded the serving BS sends an acknowledgement (ACK) message to the UE. This may provide the advantage that the UE can be informed if its coded data signal, which is destined to the serving BS has been received and decoded correctly.

Of course, if the transport block cyclic redundancy check is not successful, a complementary or corresponding Not Acknowledgement (NACK) message could be transmitted from the serving base station to the user equipment. This might trigger the UE to resend the corresponding coded data signal. Also a further coding of the data which are supposed to be transferred from the UE to the serving BS may be carried out. Such a further coding may take into account a possibly reduced quality of the radio channel extending between the UE and the serving BS and/or between the UE and the neighboring BS.

According to a further embodiment of the invention the coded data signal, which is transmitted from the user equipment and received by the serving base station and by the at least one neighboring base station, is a multiple-input and multiple-output radio signal. This may specifically provide an advantage when each BS can effectively separate the radio signals, which are transmitted from its served UE(s), from radio signals, which are transmitted from UE(s) being served by the at least one neighboring BS. Of course, in order to implement multiple-input and multiple-output (MIMO) technology, it is necessary to equip (a) the UE with an appropriate MIMO transmitter and (b) the serving and the neighboring BS with appropriate MIMO receivers.

In this respect it is mentioned that the described code block selection combining can also be applicable to carrier aggregation, i.e. different TBs are transmitted on different component carriers.

It is further mentioned that applying MIMO technology also requires an appropriate UL decoding on the receiver side (i.e. the serving BS and the neighboring BS). Thereby, also known interference cancellation methods could be employed in order to further improve the radio conditions between the transmitting UE and the receiving BS(s).

A further improvement may be achieved by a careful reference signal (RS) design respectively RS assignment for the UE(s) in the coordinated multipoint (CoMP) transmission area. For further information regarding CoMP reference is made to the publication "R1-084377, Downlink coordinated transmission - Impact on specification, TSG-RAN WG1 #55, Prague, Czech Republic, November 10-14, 2008" from Ericsson and to the publication "R1-091267, Considerations on the Uplink Reference Signal for CoMP, 3GPP TSG RAN WG1 meeting #56bis, Seoul, Korea, March 23-27, 2009" by Huawei.

According to a further aspect of the invention there is provided a serving base station for receiving data from a user equipment being served by the serving base station. The provided serving base station comprises (a) a receiving unit for receiving a coded data signal representing the data from the user equipment, (b) a processing unit for processing the coded data signal, wherein the processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, (c) a further receiving unit for receiving forwarded decoded code blocks, which have been forwarded by at least one neighboring base station to the serving base station, wherein the forwarded decoded code blocks have been generated by the at least one neighboring base station which has also received and processed the coded data signal, wherein the processing by the at least one neighboring base station also comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, and (d) a restoring unit for restoring the data by combining the correctly decoded code blocks, which have been processed by the serving base station, with the received forwarded decoded code blocks.

According to a further aspect of the invention there is provided a neighboring base station for forwarding decoded code blocks to a serving base station, which is serving a user equipment. The provided neighboring base station comprises (a) a receiving unit for receiving a coded data signal representing data from a user equipment, (b) a processing unit for processing the coded data signal, wherein the processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, and (c) a forwarding unit for forwarding the decoded code blocks, which have been correctly decoded, to a serving base station in such a manner that the serving base station is capable of restoring the data by combining the forwarded decoded code blocks with further decoded code blocks. Thereby, the further decoded code blocks have been generated by the serving base station which has also received and processed the coded data signal, wherein the processing by the serving base station also comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly.

Also the described base stations, i.e. the serving BS and the neighboring BS, are based on the idea that instead of combining comparatively large TBs the much smaller CBs can be used for combining portions of the data signal at the serving BS.

According to a further aspect of the invention there is provided a computer-readable medium on which there is stored a computer program for transferring data within a mobile telecommunication network from a user equipment being served by a serving base station to the serving base station. The computer program, when being executed by a data processor, is adapted for controlling the above described data transferring method.

The computer-readable medium may be readable by a computer or a processor. The computer-readable medium may be, for example but not limited to, an electric, magnetic, optical, infrared or semiconductor system, device or transmission medium. The computer-readable medium may include at least one of the following media: a computer-distributable medium, a program storage medium, a record medium, a computer-readable memory, a random access memory, an erasable programmable read-only memory, a computer-readable software distribution package, a computer-readable signal, a computer-readable telecommunications signal, computer-readable printed matter, and a computer-readable compressed software package.

According to a further aspect of the invention there is provided a program element for transferring data within a mobile telecommunication network from a user equipment being served by a serving base station to the serving base station. The program element, when being executed by a data processor, is adapted for controlling the above described data transferring method.

The program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The program element may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It is mentioned that in case one TB does not contain multiple CBs, the described CB selection combining can fallback to a TB selection combining.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a comparison between a known procedure for decoding received coded transport blocks (left side) and a procedure for decoding received coded transport blocks on the basis of a Code Block Selection Combining in accordance with an embodiment of the invention (right side).
Figure 2 shows a schematic illustration of a preferred embodiment for a Code Block Selection Combining.
Figure 3a to 3f show for different radio conditions a comparison between (a) a Code Block Error Rate (CBLER) vs. Signal to Noise Ratio (SNR) and (b) a Transport Block Error Rate (TBLER) vs. SNR.

### Detailed Description

The illustration in the drawing is schematically. It is noted that in different figures, similar or identical elements are provided with the same reference signs or with reference signs, which are different from the corresponding reference signs only within the first digit.

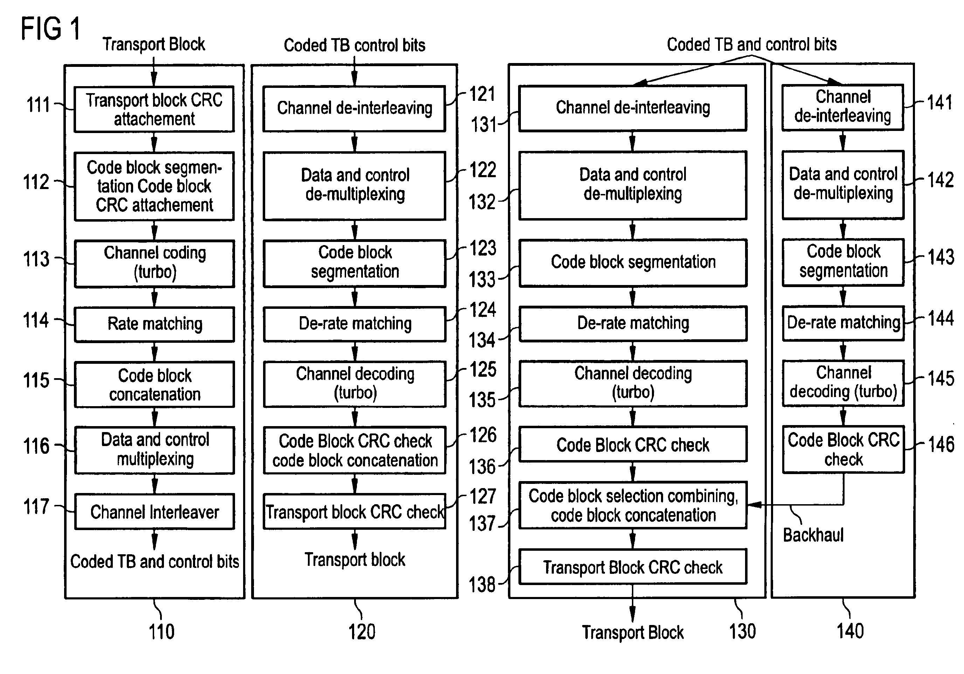

Figure 1 shows a coding procedure for a Transport Block (TB), which is carried out in a user equipment (UE) 110. Further, a known decoding procedure for a coded TB, which is carried out in a serving base station (BS) 120, is illustrated. On the right side of Figure 1 there is shown a decoding procedure in accordance with the invention described in this document, wherein the decoding procedure is carried out both in a serving BS 130 serving the UE 110 and in a neighboring BS 140.

In the described UL data transmission procedure the UE 110 represents the transmitter. On the UE side, in a first step 111, a Cyclic Redundancy Check (CRC) attachment is appended to the TB.

In a second step 112, a Code Block (CB) segmentation is carried out, wherein the TB is segmented into two or more CBs. Thereby each CBs has a size which allows for processing the CB within the physical layer 1 of the Open Systems Interconnection (OSI) model for layered communications. Within this second step 112 further a CB CRC attachment is appended to each CB.

In a third step 113 a channel coding is carried out. According to the example described here a turbo coding with a coding rate of "1/3" is applied.

In a fourth step 114 a coding rate matching is carried out. Thereby, the number of encoded symbols being included in one CB is adapted to the currently available data transport capacity.

In a fifth step 115 the CBs, which have before been segmented, are concatenated in order to form a data stream having a length, which is suitable for being transmitted via the radio interface between the UE 110 and the serving BS 120.

In a sixth step 116 a data and control multiplexing is carried out. Thereby, user data and control data are distributed to different radio transmission resources, which are available for the radio communication between the UE 110 and the serving BS 120. The control data comprise the information, which later on the receiver side will be necessary in order to perform an appropriate decoding.

In a seventh step 117 a channel interleaving is carried out. As a result a coded TB and coded control bits are obtained. The coded TB and the coded control bits are transmitted over the radio interface from the UE 110 to the serving BS 120.

On the receiver side, which according to a known decoding procedure shown on the left side of Figure 1 is represented only by a serving BS 120, the coded TB and the coded control bits are received. In the following there will be described a known decoding procedure on the receiver side.

In a first step 121 a channel de-interleaving is carried out.

In a second step 122 data and control de-multiplexing is carried out.

In a third step 123 a code block segmentation is carried out. Thereby, the coded TB is segmented in much smaller CBs, which are capable of being further processed on the physical layer 1.

In a fourth step 124 a de-rate matching is carried out.

In a fifth step 125 a channel decoding is carried out. According to the described example the channel decoding is a so called turbo decoding in accordance with the turbo coding performed on the transmitter side in the above described step 113.

In a sixth step 126 a CRC check is carried out for each CB. Further, the CBs, which have been successfully checked, are concatenated with each other in order to form a TB.

In a seventh step 127 a CRC check is carried out with the TB provided by step 126. In case the CRC TB check is successful, a proper TB is obtained.

In the following there will be described in accordance with the invention an improved decoding procedure on the receiver side, wherein the decoding procedure relies on a point to multipoint reception involving a serving BS 130 and a neighboring BS 140.

The coding procedure on the UE side is the same as described above (see steps 111 to 117). In accordance with the principles of a point to multipoint reception the coded TB and the coded control bits, which have been produced by the transmitting UE, are received both by the serving BS 130 and the neighboring BS 140.

As can be seen from Figure 1 (right side), the first five steps 131, 132, 133, 134 and 135 of the decoding procedure carried out by the serving BS 130 are the same as the first five steps 121, 122, 123, 124 and 125, respectively, which are carried out in the known decoding procedure by the serving BS 120. The same holds for the first five steps 141, 142, 143, 144 and 145 of the decoding procedure carried out by the neighboring BS 140.

In a sixth step, which carried out both by the serving BS 130 (see reference numeral 136) and by the neighboring BS 140 (see reference numeral 146), a CRC check is performed for each decoded CB. Each CB, which has been successfully CRC checked by the neighboring BS 140, is forwarded via a Backhaul connection such as for instance a X2 interface from the neighboring BS 140 to the serving BS 130.

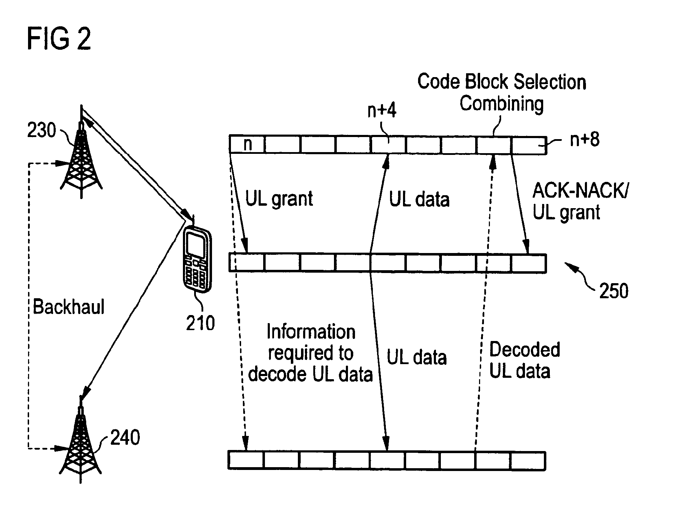

In a seventh step 137, which according to the embodiment described here is performed by the serving BS 137, a Code Block Selection Combining and a Code Block concatenation is carried out. In the Code Block Selection Combining procedure, CBs, which have been incorrectly decoded by the serving BS 130, are replaced with correctly decoded CBs received from the neighboring BS 140 or possibly from other neighboring BSs, which are not depicted in Figure 2. In the Code Block concatenation the correctly decoded CBs are concatenated in order to restore a TB.

In an eighth step 138 a CRC check is carried out with the restored TB. In case of a positive CRC check a TB representing the received user data is obtained.

Figure 2 shows a schematic illustration of a preferred embodiment for a Code Block Selection Combining, which is carried out by a serving base station 230 serving a UE 210. The Code Block Selection Combining is performed for UL data from the UE 210, which are received both by the serving BS 230 and a neighboring BS 240.

It is assumed that the BSs 230 and 240, which according to the embodiment described here are participating in the joint reception, are synchronized with respect to each other.

In the described embodiment the serving BS 230 and the neighboring BS 240 receive the UL data respectively the transport block in a subframe number n+4. Before the subframe n+4, the serving BS 230 sends the information required to decode this UL data to the neighbor cell (via the backbone interface e.g. X2 or by means of over-the-air BS-to-BS communication). In subframe n+4, both the serving BS 230 and the neighboring BS 240 attempt to decode the UL data of the UE 210. The neighboring BS 240 decodes the data at least to the stage of the code block CRC check and sends the correctly decoded code blocks to the serving cell before the subframe n+8 (via the backbone interface e.g. X2 or by means of over-the-air BS-to-BS communication). Until subframe n+8, the serving BS 230 performs a Code Block Selection Combining of the locally decoded CBs and the CBs received from the neighboring BS 240 cell followed by the TB CRC check. In sub-frame n+8, the serving BS 230 sends a corresponding ACK/NACK.

It is mentioned that in case the UE's transmission includes only one CB, the above operations fallbacks to a known TB selection combining.

It is further mentioned that, if all CBs are received correctly by the neighboring BS 240 and the TB CRC check at the neighboring BS 240 is successful, the neighboring BS 240 can send the whole TB in which case the combining at the serving BS 230 can be either a Code Block Selection or a Transport Block Selection.

It is further mentioned that the invention described in this document is not limited to only one TB. The invention is of course equally applicable and can be easily extended to the case when one UE transmits more than one TB in a TTI e.g. in SU-MIMO and/or in carrier aggregation operation. It has also to be understood art that the implementation of the method proposed in this application is exemplified assuming only one neighboring BS but it is equally applicable to the case when more than one neighboring BS participate in the joint reception and can contribute to CBs for a subsequent Code Block Selection Combining in the serving BS.

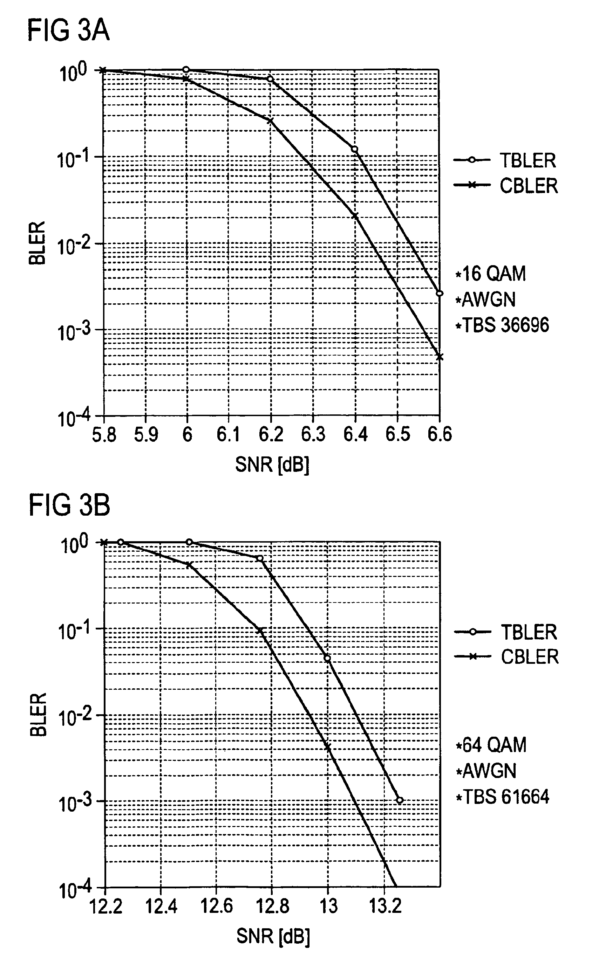

Figure 3a to 3f show, for different radio conditions, on a logarithmic scale a comparison between (a) a Code Block Error Rate (CBLER) vs. Signal to Noise Ratio (SNR) and (b) a Transport Block Error Rate (TBLER) vs. SNR.

The ratio of CBLER/TBLER can be interpreted as the percentage of wrongly received CBs per erroneous TB. Therefore, the simulation results indicate a difference between the CBLER and TBLER and the fact that often even though a TB is erroneous a certain number of CBs of that TB is correctly received and can be utilized in the proposed Code Block Selection Combining.

Figure 3a and 3b show simulations with an Additive White Gaussian Noise (AWGN), which is a realistic assumption for line of sight radio connections. In Figure 3a a 16 Quadrature Amplitude Modulation (QAM) scheme and a Transport Block Size (TBS) of 36696 bits has been assumed. In Figure 3b a 64 Quadrature Amplitude Modulation (QAM) scheme and a Transport Block Size (TBS) of 61664 bits has been assumed. As one can see from both Figures 3a and 3b, the CBLER is smaller than the TBLER. This holds in particular for better radio connections having a larger Signal-to-Noise Ration (SNR).

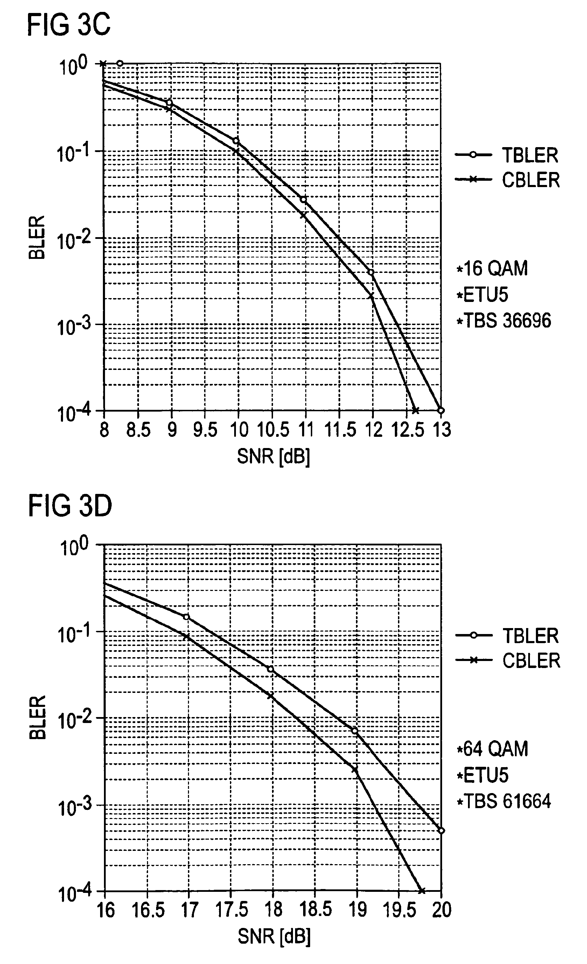

Figure 3c and 3d show simulations based on the known Evolved Typical Urban (ETU) 5 radio channel model, which is a good assumption for pedestrians moving within an urban region with a velocity of 2.7 km/h. In Figure 3c a 16 Quadrature Amplitude Modulation (QAM) scheme and a Transport Block Size (TBS) of 36696 bits has been assumed. In Figure 3d a 64 Quadrature Amplitude Modulation (QAM) scheme and a Transport Block Size (TBS) of 61664 bits has been assumed. As one can see from both Figures 3c and 3d, the CBLER is always smaller than the TBLER. This holds in particular for better radio connections having a larger Signal-to-Noise Ration (SNR).

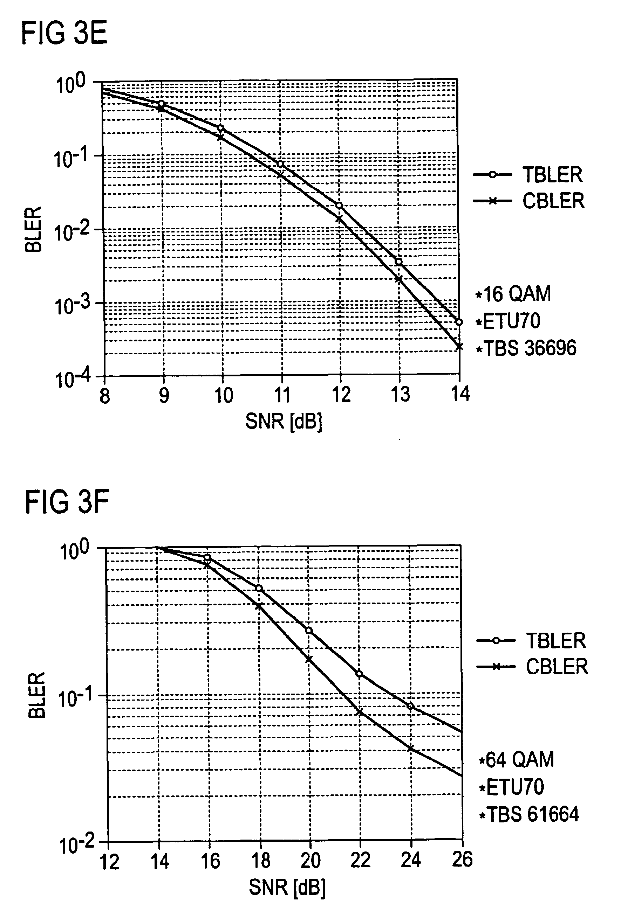

Figure 3e and 3f show simulations based on the known ETU70 radio channel model, which is a good assumption for motorized subscribers/users moving within an urban region with a velocity of 37.8 km/h. In Figure 3e again a 16 Quadrature Amplitude Modulation (QAM) scheme and a Transport Block Size (TBS) of 36696 bits has been assumed. In Figure 3f again a 64 Quadrature Amplitude Modulation (QAM) scheme and a Transport Block Size (TBS) of 61664 bits has been assumed. As one can see from both Figures 3e and 3f, also for ETU70 the CBLER is always smaller than the TBLER.

The following Table 1 summarizes briefly the parameters, which have been used for the simulations shown in Figures 3a to 3f.

**Table 1: Simulation assumptions**

| Parameter | Value/Comment |
|---|---|
| TBS | 16QAM: 36696 bits, |
| | 64QAM: 61664 bits |
| Bandwidth | 20 MHz |
| Physical Resource Block (PRB) allocation | 100 |
| Antenna Configuration | 1TX / 2RX |
| Channel estimation | Realistic |
| Power Control | OFF |
| Number of CBs per TB | 16QAM: 6, |
| | 64QAM: 11 |
| Channel Models | AWGN, ETU5, ETU70 |

The described method for transferring data can be carried out by a serving base station and/or by a neighboring base station. Such a serving base station comprises (a) a receiving unit for receiving a coded data signal representing the data from the user equipment, (b) a processing unit for processing the coded data signal, wherein the processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, (c) a further receiving unit for receiving forwarded decoded code blocks, which have been forwarded by at least one neighboring base station to the serving base station, wherein the forwarded decoded code blocks have been generated by the at least one neighboring base station which has also received and processed the coded data signal, wherein the processing by the at least one neighboring base station also comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, and (d) a restoring unit for restoring the data by combining the correctly decoded code blocks, which have been processed by the serving base station, with the received forwarded decoded code blocks.

Accordingly, such a neighboring base station comprises (a) a receiving unit for receiving a coded data signal representing data from a user equipment, (b) a processing unit for processing the coded data signal, wherein the processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, and (c) a forwarding unit for forwarding the decoded code blocks, which have been correctly decoded, to a serving base station in such a manner that the serving base station is capable of restoring the data by combining the forwarded decoded code blocks with further decoded code blocks. Thereby, the further decoded code blocks have been generated by the serving base station which has also received and processed the coded data signal, wherein the processing by the serving base station also comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly.

Further, a known base station may be transferred to a base station in accordance with the present invention, if a data processor of the base station executes an according computer program or an according program element, which may be stored on a computer readable medium. The execution of the computer program and/or the program element by an data processor may cause the following steps to be carried out: (a) receiving a coded data signal representing the data from the user equipment both by the serving base station and by at least one neighboring base station, (b) processing the coded data signal both by the serving base station and by the neighboring base station, wherein each processing comprises a segmentation of the coded data signal into code blocks, a decoding of the code blocks and a code block cyclic redundancy check for each of the decoded code blocks, wherein a result of the cyclic redundancy check is indicative whether the respective code block has been decoded correctly, (c) forwarding the decoded code blocks, which have been correctly decoded by the neighboring base station, from the neighboring base station to the serving base station, and (d) restoring the data at the serving base station by combining the correctly decoded code blocks, which have been processed by the serving base station, with the forwarded decoded code blocks.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 110: User Equipment (transmitter)
- 111: Transport Block CRC attachment
- 112: Code Block segmentation, Code Block CRC attachment
- 113: Channel coding (turbo)
- 114: Rate matching
- 115: Code Block concatenation
- 116: Data control multiplexing
- 117: Channel Interleaver
- 120: serving base station (receiver)
- 121: Channel de-interleaving
- 122: Data and control de-multiplexing
- 123: Code Block segmentation
- 124: De-rate matching
- 125: Channel decoding (turbo)
- 126: Code Block CRC check, Code Block concatenation
- 127: Transport Block CRC check
- 130: serving base station
- 131: Channel de-interleaving
- 132: Data and control de-multiplexing
- 133: Code Block concatenation
- 134: De-rate matching
- 135: Channel decoding (turbo)
- 136: Code Block CRC check
- 137: Code Block selection combining, Code Block concatenation
- 138: Transport Block CRC check
- 140: neighboring base station
- 141: Channel de-interleaving
- 142: Data and control de-multiplexing
- 143: Code Block concatenation
- 144: De-rate matching
- 145: Channel decoding (turbo)
- 146: Code Block CRC check

- 210: User Equipment (transmitter)
- 230: serving base station
- 240: neighboring base station
- 250: Transport Block / Time Transmission Interval

## Claims

1. A method for transferring data within a mobile telecommunication network from a user equipment (110, 210) being served by a serving base station (130, 230) to the serving base station (130, 230), the method comprising
● receiving a coded data signal representing the data from the user equipment (110, 210) both by the serving base station (130, 230) and by at least one neighboring base station (140, 240),
● processing the coded data signal both by the serving base station (130, 230) and by the neighboring base station (140, 240), wherein each processing comprises a segmentation (133, 143) of the coded data signal into code blocks, a decoding (135, 145) of the code blocks and a code block cyclic redundancy check (136, 146) for each of the decoded code blocks, wherein a result of the cyclic redundancy check is indicative whether the respective code block has been decoded correctly,
● forwarding the decoded code blocks, which have been correctly decoded by the neighboring base station (140, 240), from the neighboring base station (140, 240) to the serving base station (130, 230), and
● restoring (137) the data at the serving base station (130, 230) by combining
- the correctly decoded code blocks, which have been processed by the serving base station (130, 230), with
- the forwarded decoded code blocks.

2. The method as set forth in the preceding claim, further comprising
● providing decoding information from the serving base station (130, 230) to the at least one neighboring base station (140, 240), wherein the decoding information is indicative for a proper decoding of the code blocks at the at least one neighboring base station (140, 240).

3. The method as set forth in the preceding claim 2, wherein the decoding information is indicative for a dynamic configuration of the user equipment (110, 210).

4. The method as set forth in the preceding claim, wherein the decoding information comprises at least one of the following information:
● the size for transport blocks,
● the allocation of radio transmission resources,
● redundancy version,
● a request flag for a Channel Quality Indicator,
● a cyclic shift for demodulation reference signal,
● presence and/or absence of acknowledgement and/or non-acknowledgement messages,
● configuration of acknowledgement and/or non- acknowledgement messages.

5. The method as set forth in any one of the preceding claims 2 to 4, wherein
the decoding information is indicative for a semi-static configuration of the user equipment (110, 210).

6. The method as set forth in the preceding claim, wherein the decoding information comprises at least one of the following information:
● configuration of the uplink demodulation reference signal,
● radio network temporary identifier of the UE,
● identification of the serving base station (130, 230),
● presence and/or absence of a sounding reference signal,
● presence and/or absence of a Channel Quality Indicator, a Rank Indicator and/or Precoding Matrix Indicator,
● configuration of a Channel Quality Indicator, a Rank Indicator and/or Precoding Matrix Indicator,
● configuration of the sounding reference signal resources.

7. The method as set forth in any one of the preceding claims, wherein forwarding the decoded code blocks from the neighboring base station (140, 240) to the serving base station (130, 230) is carried out via a backbone interface connecting the serving base station (130, 230) and the neighboring base station (140, 240).

8. The method as set forth in any one of the preceding claims, further comprising
● performing a transport block cyclic redundancy check (138) on the restored data, and
● if the transport block cyclic redundancy check is successful, transmitting a positive acknowledgement message from the serving base station (130, 230) to the user equipment (110, 210).

9. The method as set forth in any one of the preceding claims, wherein
the coded data signal, which is transmitted from the user equipment (110, 210) and received by the serving base station (130, 230) and by the at least one neighboring base station (140, 240), is a multiple-input and multiple-output radio signal.

10. A serving base station for receiving data from a user equipment (110, 210) being served by the serving base station (130, 230), the serving base station (130, 230) comprising
● a receiving unit for receiving a coded data signal representing the data from the user equipment (110, 210),
● a processing unit for processing the coded data signal, wherein the processing comprises a segmentation (133) of the coded data signal into code blocks, a decoding (135) of the code blocks and a code block cyclic redundancy check (136) for each of the decoded code blocks, wherein a result of the cyclic redundancy check is indicative whether the respective code block has been decoded correctly,
● a transmitting unit for transmitting information to at least one neighbouring base station (140, 240) required to decode the coded data signal received from the user equipment (110, 210),
● a further receiving unit for receiving correctly decoded code blocks based on the same coded data signal, forwarded by at least one neighbouring base station (140, 240), and
● a restoring unit for restoring (137) the data by combining
- the correctly decoded code blocks, which have been processed by the serving base station (130, 230), with
- the received correctly decoded code blocks forwarded by the at least one neighbouring base station (140, 240).

11. A neighboring base station for forwarding decoded code blocks to a serving base station (130, 230), which is serving a user equipment (110, 210), the neighboring base station (140, 240) comprising
● a receiving unit for receiving a coded data signal representing data from a user equipment (110, 210),
● a processing unit for processing the coded data signal, wherein the processing comprises a segmentation (143) of the coded data signal into code blocks, a decoding (145) of the code blocks and a code block cyclic redundancy check (146) for each of the decoded code blocks, wherein a result of the cyclic redundancy check is indicative whether the respective code block has been decoded correctly, and
● a forwarding unit for forwarding the decoded code blocks, which have been correctly decoded, to the serving base station (130, 230) in such a manner that the serving base station (130, 230) is capable of restoring (137) the data by combining
- the forwarded decoded code blocks with
- further decoded code blocks, which have been generated by the serving base station (130, 230) which has also received and processed the coded data signal, wherein the processing by the serving base station (130, 230) also comprises a segmentation (133) of the coded data signal into code blocks, a decoding (135) of the code blocks and a code block cyclic redundancy check (136) for each of the decoded code blocks, wherein a result of the cyclic redundancy check is indicative whether the respective code block has been decoded correctly.

12. A computer-readable medium on which there is stored a computer program for transferring data within a mobile telecommunication network from a user equipment (110, 210) being served by a serving base station (130, 230) to the serving base station (130, 230), the computer program, when being executed by a data processor, is adapted for controlling the method as set forth in any one of the claims 1 to 9.

13. A program element for transferring data within a mobile telecommunication network from a user equipment (110, 210) being served by a serving base station (130, 230) to the serving base station (130, 230), the program element, when being executed by a data processor, is adapted for controlling the method as set forth in any one of the claims 1 to 9.

## Patentansprüche

1. Verfahren zum Übertragen von Daten in einem mobilen Telekommunikationsnetz von einem mobilen Endgerät (110, 210), das von einer versorgenden Basisstation (130, 230) bedient wird, zu der versorgenden Basisstation (130, 230), wobei das Verfahren Folgendes aufweist:
● Empfangen eines codierten Datensignals, das die Daten von dem mobilen Endgerät (110, 210) repräsentiert, sowohl durch die versorgende Basisstation (130, 230) als auch durch mindestens eine benachbarte Basisstation (140, 240),
● Verarbeiten des codierten Datensignals sowohl durch die versorgende Basisstation (130, 230) als auch durch die benachbarte Basisstation (140, 240), wobei jede Verarbeitung eine Segmentierung (133, 143) des codierten Datensignals in Codeblöcke, ein Decodieren (135, 145) der Codeblöcke und eine zyklische Codeblock-Redundanzprüfung (136, 146) für jeden der decodierten Codeblöcke beinhaltet, wobei ein Ergebnis der zyklischen Redundanzprüfung indikativ dafür ist, ob der jeweilige Codeblock korrekt decodiert wurde,
● Weiterleiten der decodierten Codeblöcke, welche durch die benachbarte Basisstation (140, 240) korrekt decodiert wurden, von der benachbarten Basisstation (140, 240) zu der versorgenden Basisstation (130, 230), und
● Wiederherstellen (137) der Daten an der versorgenden Basisstation (130, 230) durch Kombinieren
- der korrekt decodierten Codeblöcke, welche durch die versorgende Basisstation (130, 230) verarbeitet wurden, mit
- den weitergeleiteten decodierten Codeblöcken.

2. Verfahren nach dem vorhergehenden Anspruch, welches ferner Folgendes aufweist:
● Liefern von Decodierungsinformationen von der versorgenden Basisstation (130, 230) an die mindestens eine benachbarte Basisstation (140, 240), wobei die Decodierungsinformationen indikativ hinsichtlich einer richtigen Decodierung der Codeblöcke an der mindestens einen benachbarten Basisstation (140, 240) sind.

3. Verfahren nach dem vorhergehenden Anspruch 2, wobei die Decodierungsinformationen indikativ hinsichtlich einer dynamischen Konfiguration des mobilen Endgeräts (110, 210) sind.

4. Verfahren nach dem vorhergehenden Anspruch, wobei die Decodierungsinformationen mindestens eine der folgenden Informationen enthalten:
● die Größe für Transportblöcke,
● die Zuweisung von Funkübertragungsressourcen,
● Redundanzversion,
● ein Anforderungs-Flag für einen Kanalqualitätsindikator,
● eine zyklische Verschiebung für ein Demodulationsreferenzsignal,
● Vorhandensein und/oder Nichtvorhandensein von Bestätigungs- und/oder Nichtbestätigungs-Nachrichten,
● Konfiguration von Bestätigungs- und/oder Nichtbestätigungs-Nachrichten.

5. Verfahren nach einem der vorhergehenden Ansprüche 2 bis 4, wobei
die Decodierungsinformationen für eine semi-statische Konfiguration des mobilen Endgeräts (110, 210) indikativ sind.

6. Verfahren nach dem vorhergehenden Anspruch, wobei die Decodierungsinformationen mindestens eine der folgenden Informationen enthalten:
● Konfiguration des Demodulationsreferenzsignals der Aufwärtsstrecke,
● temporäre Funknetzkennung des mobilen Endgeräts,
● Kennung der versorgenden Basisstation (130, 230),
● Vorhandensein und/oder Nichtvorhandensein eines Sounding-Referenzsignals,
● Vorhandensein und/oder Nichtvorhandensein eines Kanalqualitätsindikators, eines Rangindikators und/oder eines Vorcodiermatrixindikators,
● Konfiguration eines Kanalqualitätsindikators, eines Rangindikators und/oder eines Vorcodiermatrixindikators,
● Konfiguration der Sounding-Referenzsignal-Ressourcen.

7. Verfahren nach einem der vorhergehenden Ansprüche, wobei
das Weiterleiten der decodierten Codeblöcke von der benachbarten Basisstation (140, 240) zu der versorgenden Basisstation (130, 230) über eine Backbone-Schnittstelle durchgeführt wird, welche die versorgende Basisstation (130, 230) und die benachbarte Basisstation (140, 240) verbindet.

8. Verfahren nach einem der vorhergehenden Ansprüche, welches ferner Folgendes aufweist:
● Durchführen einer zyklischen Transportblock-Redundanzprüfung (138) an den wiederhergestellten Daten, und
● falls die zyklische Transportblock-Redundanzprüfung erfolgreich ist, Senden einer positiven Bestätigungsnachricht von der versorgenden Basisstation (130, 230) zu dem mobilen Endgerät (110, 210).

9. Verfahren nach einem der vorhergehenden Ansprüche, wobei
das codierte Datensignal, welches von dem mobilen Endgerät (110, 210) gesendet wird und von der versorgenden Basisstation (130, 230) und von der mindestens einen benachbarten Basisstation (140, 240) empfangen wird, ein Funksignal mit mehreren Eingängen und mehreren Ausgängen ist.

10. Versorgende Basisstation zum Empfangen von Daten von einem mobilen Endgerät (110, 210), das von der versorgenden Basisstation (130, 230) bedient wird, welche Folgendes aufweist:
● eine Empfangseinheit zum Empfangen eines codierten Datensignals, das die Daten von dem mobilen Endgerät (110, 210) repräsentiert,
● eine Verarbeitungseinheit zum Verarbeiten des codierten Datensignals, wobei die Verarbeitung eine Segmentierung (133) des codierten Datensignals in Codeblöcke, ein Decodieren (135) der Codeblöcke und eine zyklische Codeblock-Redundanzprüfung (136) für jeden der decodierten Codeblöcke beinhaltet, wobei ein Ergebnis der zyklischen Redundanzprüfung indikativ dafür ist, ob der jeweilige Codeblock korrekt decodiert wurde,
● eine Sendeeinheit zum Senden von Informationen zu mindestens einer benachbarten Basisstation (140, 240), die erforderlich sind, um das codierte Datensignal, das von dem mobilen Endgerät (110, 210) empfangen wurde, zu decodieren,
● eine weitere Empfangseinheit zum Empfangen korrekt decodierter Codeblöcke auf der Basis desselben codierten Datensignals, die von mindestens einer benachbarten Basisstation (140, 240) weitergeleitet wurden, und
● eine Wiederherstellungseinheit zum Wiederherstellen (137) der Daten durch Kombinieren
- der korrekt decodierten Codeblöcke, welche durch die versorgende Basisstation (130, 230) verarbeitet wurden, mit
- den empfangenen korrekt decodierten Codeblöcken, die von der mindestens einen benachbarten Basisstation (140, 240) weitergeleitet wurden.

11. Benachbarte Basisstation zum Weiterleiten decodierter Codeblöcke an eine versorgende Basisstation (130, 230), welche ein mobiles Endgerät (110, 210) bedient, wobei die benachbarte Basisstation (140, 240) Folgendes aufweist:
● eine Empfangseinheit zum Empfangen eines codierten Datensignals, das Daten von einem mobilen Endgerät (110, 210) repräsentiert,
● eine Verarbeitungseinheit zum Verarbeiten des codierten Datensignals, wobei die Verarbeitung eine Segmentierung (143) des codierten Datensignals in Codeblöcke, ein Decodieren (145) der Codeblöcke und eine zyklische Codeblock-Redundanzprüfung (146) für jeden der decodierten Codeblöcke beinhaltet, wobei ein Ergebnis der zyklischen Redundanzprüfung indikativ dafür ist, ob der jeweilige Codeblock korrekt decodiert wurde, und
● eine Weiterleitungseinheit zum Weiterleiten der decodierten Codeblöcke, welche korrekt decodiert wurden, an die versorgende Basisstation (130, 230) auf eine solche Weise, dass die versorgende Basisstation (130, 230) in der Lage ist, die Daten wiederherzustellen (137) durch Kombinieren
- der weitergeleiteten decodierten Codeblöcke mit
- weiteren decodierten Codeblöcken, welche von der versorgenden Basisstation (130, 230) erzeugt wurden, welche das codierte Datensignal ebenfalls empfangen und verarbeitet hat, wobei die Verarbeitung durch die versorgende Basisstation (130, 230) außerdem eine Segmentierung (133) des codierten Datensignals in Codeblöcke, ein Decodieren (135) der Codeblöcke und eine zyklische Codeblock-Redundanzprüfung (136) für jeden der decodierten Codeblöcke beinhaltet, wobei ein Ergebnis der zyklischen Redundanzprüfung indikativ dafür ist, ob der jeweilige Codeblock korrekt decodiert wurde.

12. Computerlesbares Medium, auf welchem ein Computerprogramm zum Übertragen von Daten in einem mobilen Telekommunikationsnetz von einem mobilen Endgerät (110, 210), das von einer versorgenden Basisstation (130, 230) bedient wird, zu der versorgenden Basisstation (130, 230) gespeichert ist, wobei das Computerprogramm, wenn es von einem Datenprozessor ausgeführt wird, geeignet ist, das Verfahren nach einem der Ansprüche 1 bis 9 zu steuern.

13. Programmelement zum Übertragen von Daten in einem mobilen Telekommunikationsnetz von einem mobilen Endgerät (110, 210), das von einer versorgenden Basisstation (130, 230) bedient wird, zu der versorgenden Basisstation (130, 230), wobei das Programmelement, wenn es von einem Datenprozessor ausgeführt wird, geeignet ist, das Verfahren nach einem der Ansprüche 1 bis 9 zu steuern.

## Revendications

1. Un procédé de transfert de données à l'intérieur d'un réseau de télécommunication mobile d'un équipement d'utilisateur (110, 210) qui est desservi par une station de base de desserte (130, 230) vers la station de base de desserte (130, 230), le procédé comprenant
• la réception d'un signal de données codé représentant les données provenant de l'équipement d'utilisateur (110, 210) à la fois par la station de base de desserte (130, 230) et par au moins une station de base voisine (140, 240),
• le traitement du signal de données codé à la fois par la station de base de desserte (130, 230) et par la station de base voisine (140, 240), chaque traitement comprenant une segmentation (133, 143) du signal de données codé en blocs de code, un décodage (135, 145) des blocs de code et un contrôle par redondance cyclique des blocs de code (136, 146) pour chacun des blocs de code décodés, un résultat du contrôle par redondance cyclique étant indicatif du fait que le bloc de code respectif a été correctement décodé,
• la transmission des blocs de code décodés, qui ont été correctement décodés par la station de base voisine (140, 240), de la station de base voisine (140, 240) vers la station de base de desserte (130, 230), et
• la restauration (137) des données au niveau de la station de base de desserte (130, 230) par la combinaison
- des blocs de code correctement décodés, qui ont été traités par la station de base de desserte (130, 230), avec
- les blocs de code décodés transmis.

2. Le procédé selon la revendication précédente, comprenant en outre
• la fourniture d'informations de décodage de la station de base de desserte (130, 230) à la au moins une station de base voisine (140, 240), les informations de décodage étant indicatives d'un décodage correct des blocs de code au niveau de la au moins une station de base voisine (140, 240).

3. Le procédé selon la revendication précédente 2, dans lequel les informations de décodage sont indicatives d'une configuration dynamique de l'équipement d'utilisateur (110, 210).

4. Le procédé selon la revendication précédente, dans lequel les informations de décodage comprennent au moins une des informations suivantes :
• la taille des blocs de transport,
• l'attribution de ressources de transmission radio,
• version de redondance,
• une balise de demande pour un indicateur de qualité de canal,
• un décalage cyclique pour un signal de référence de démodulation,
• présence et/ou absence de messages d'accusé de réception et/ou de non-accusé de réception,
• configuration de messages d'accusé de réception et/ou de non-accusé de réception.

5. Le procédé selon l'une quelconque des revendications précédentes 2 à 4, dans lequel
les informations de décodage sont indicatives d'une configuration semi-statique de l'équipement d'utilisateur (110, 210).

6. Le procédé selon la revendication précédente, dans lequel les informations de décodage comprennent au moins une des informations suivantes :
• configuration du signal de référence de démodulation en liaison montante,
• identifiant temporaire de réseau radio de l'UE,
• identification de la station de base de desserte (130, 230),
• présence et/ou absence d'un signal de référence de sondage,
• présence et/ou absence d'un indicateur de qualité de canal, d'un indicateur de rang et/ou d'un indicateur de matrice de précodage,
• configuration d'un indicateur de qualité de canal, d'un indicateur de rang et/ou d'un indicateur de matrice de précodage,
• configuration des ressources de signal de référence de sondage.

7. Le procédé selon l'une quelconque des revendications précédentes, dans lequel
la transmission des blocs de code décodés de la station de base voisine (140, 240) vers la station de base de desserte (130, 230) est effectuée par l'intermédiaire d'une interface de réseau fédérateur reliant la station de base de desserte (130, 230) et la station de base voisine (140, 240).

8. Le procédé selon l'une quelconque des revendications précédentes, comprenant en outre
• l'exécution d'un contrôle par redondance cyclique des blocs de transport (138) sur les données restaurées, et
• si le contrôle par redondance cyclique des blocs de transport est fructueux, la transmission d'un message d'accusé de réception positif de la station de base de desserte (130, 230) à l'équipement d'utilisateur (110, 210).

9. Le procédé selon l'une quelconque des revendications précédentes, dans lequel
le signal de données codé, qui est transmis à partir de l'équipement d'utilisateur (110, 210) et reçu par la station de base de desserte (130, 230) et par la au moins une station de base voisine (140, 240), est un signal radio à entrées multiples sorties multiples.

10. Une station de base de desserte destinée à la réception de données provenant d'un équipement d'utilisateur (110, 210) qui est desservi par la station de base de desserte (130, 230), la station de base de desserte (130, 230) comprenant
• une unité de réception destinée à la réception d'un signal de données codé représentant les données provenant de l'équipement d'utilisateur (110, 210),
• une unité de traitement destinée au traitement du signal de données codé, le traitement comprenant une segmentation (133) du signal de données codé en blocs de code, un décodage (135) des blocs de code et un contrôle par redondance cyclique des blocs de code (136) pour chacun des blocs de code décodés, un résultat du contrôle par redondance cyclique étant indicatif du fait que le bloc de code respectif a été correctement décodé,
• une unité de transmission destinée à la transmission d'informations à au moins une station de base voisine (140, 240) nécessaires pour décoder le signal de données codé reçu provenant de l'équipement d'utilisateur (110, 210),
• une autre unité de réception destinée à la réception de blocs de code correctement décodés basés sur le même signal de données codé, transmis par au moins une station de base voisine (140, 240), et
• une unité de restauration destinée à la restauration (137) des données par la combinaison
- des blocs de code correctement décodés, qui ont été traités par la station de base de desserte (130, 230), avec
- les blocs de code correctement décodés reçus transmis par la au moins une station de base voisine (140, 240).

11. Une station de base voisine destinée à la transmission de blocs de code décodés à une station de base de desserte (130, 230), qui dessert un équipement d'utilisateur (110, 210), la station de base voisine (140, 240) comprenant
• une unité de réception destinée à la réception d'un signal de données codé représentant des données provenant d'un équipement d'utilisateur (110, 210),
• une unité de traitement destinée au traitement du signal de données codé, le traitement comprenant une segmentation (143) du signal de données codé en blocs de code, un décodage (145) des blocs de code et un contrôle par redondance cyclique des blocs de code (146) pour chacun des blocs de code décodés, un résultat du contrôle par redondance cyclique étant indicatif du fait que le bloc de code respectif a été correctement décodé, et
• une unité de transmission destinée à la transmission des blocs de code décodés, qui ont été correctement décodés, à la station de base de desserte (130, 230) de sorte que
la station de base de desserte (130, 230) soit capable de restaurer (137) les données par la combinaison
- des blocs de code décodés transmis avec
- d'autres blocs de code décodés, qui ont été générés par la station de base de desserte (130, 230) qui a également reçu et traité le signal de données codé, le traitement par la station de base de desserte (130, 230) comprenant également une segmentation (133) du signal de données codé en blocs de code, un décodage (135) des blocs de code et un contrôle par redondance cyclique des blocs de code (136) pour chacun des blocs de code décodés, un résultat du contrôle par redondance cyclique étant indicatif du fait que le bloc de code respectif a été correctement décodé.

12. Un support lisible par ordinateur sur lequel est conservé en mémoire un programme informatique destiné au transfert de données à l'intérieur d'un réseau de télécommunication mobile d'un équipement d'utilisateur (110, 210) qui est desservi par une station de base de desserte (130, 230) vers la station de base de desserte (130, 230), le programme informatique, lorsqu'il est exécuté par un processeur de données, étant adapté de façon à commander le procédé selon l'une quelconque des revendications 1 à 9.

13. Un élément de programme destiné à transférer des données à l'intérieur d'un réseau de télécommunication mobile d'un équipement d'utilisateur (110, 210) qui est desservi par une station de base de desserte (130, 230) vers la station de base de desserte (130, 230), l'élément de programme, lorsqu'il est exécuté par un processeur de données, étant adapté de façon à commander le procédé selon l'une quelconque des revendications 1 à 9.
